# EUROPÄISCHE PATENTANMELDUNG

(11) **EP 3 159 570 A1**
(43) Veröffentlichungstag der Anmeldung: **26.04.2017**
(21) Anmeldenummer: 15190418.2
(22) Anmeldetag: 19.10.2015
(51) Int. Cl.: F16D 65/00, F16D 65/097

(54) **SCHEIBENBREMSBELAG MIT DÄMPFUNGSEINRICHTUNG**

(71) Anmelder: LUMAG Sp. z o.o., 64-840 Budzyn (PL)
(72) Erfinder: Paszkiel, Marek, 64-610 Rogozno (PL)
(74) Vertreter: Eisenführ Speiser

(57) **Zusammenfassung**

Die Erfindung betrifft einen Scheibenbremsbelag (1), mit einer Trägerplatte (2), einem Belagsmaterial (4), das fest mit einer belagsseitigen Oberfläche (6) der Trägerplatte (2) verbunden ist, und einer Dämpfungseinrichtung (12) zum Dämpfen von durch einen Bremsvorgang verursachten akustischen Schwingungen. Erfindungsgemäß ist vorgesehen, dass die Dämpfungseinrichtung (12) mittels einer mechanischen Sicherungseinrichtung (16) gegen Lösen von der Trägerplatte (2) sowohl in einer Ebene (E) der Trägerplatte als auch senkrecht dazu gesichert ist. Die Erfindung betrifft ferner eine Dämpfungseinrichtung (12).

## Beschreibung

Die vorliegende Erfindung betrifft einen Scheibenbremsbelag mit einer Trägerplatte, einem Belagsmaterial, das fest mit einer belagsseitigen Oberfläche der Trägerplatte verbunden ist, und einer Dämpfungseinrichtung zum Dämpfen von durch einen Bremsvorgang verursachten akustischen Schwingungen. Weiterhin betrifft die Erfindung eine Dämpfungseinrichtung für einen derartigen Scheibenbremsbelag.

Scheibenbremsbeläge der vorgenannten Art kommen üblicherweise in Bremsanlagen der Fahrzeugindustrie zum Einsatz. Die Herstellung von Scheibenbremsbelägen vollzieht sich üblicherweise derart, dass Reibmaterial als Belagsmaterial auf eine Trägerplatte aufgepresst wird. Das Reibmaterial ist typischerweise ein Kompositmaterial mit metallischen, organischen und/oder keramischen Bestandteilen, während die Trägerplatte vorzugsweise aus Stahl gefertigt ist. Im Betrieb von Bremsanlagen sind insbesondere die Scheibenbremsbeläge hohen thermischen und mechanischen Belastungen ausgesetzt, wodurch Schwingungen hervorgerufen werden. Diese Schwingungen sind häufig im hörbaren Bereich und werden von Personen oft als Quietschen wahrgenommen. Es wurden in der Vergangenheit verschiedene Maßnahmen ergriffen, dieses Quietschen zu verhindern oder zu unterdrücken. Eine Möglichkeit ist beispielsweise, bestimmte Geometrien an dem Belagsmaterial vorzusehen, wie etwa Vertiefungen oder dergleichen. Eine andere Möglichkeit ist das Anbringen von Dämpfungseinrichtungen, die in der Regel auf der dem Belagsmaterial abgewandten Seite der Trägerplatte befestigt sind.

Ein Lösungsansatz sieht beispielsweise vor, eine derartige Dämpfungseinrichtung in Scheibenform vorzusehen, als sogenanntes Antiquietschblech, und dieses mittels einer Klebeverbindung an der Trägerplatte zu befestigen. Unter dem stetigen Einfluss von Schwingungen kann es allerdings dazu kommen, dass sich die Klebeverbindung löst und so die Dämpfungseinrichtung nicht mehr mit der Trägerplatte verbunden ist und herabfällt. Dies ist zum einen nachteilig, da dann das Problem des Quietschens wieder auftritt, und andererseits birgt dies auch sicherheitstechnische Risiken.

Es ist daher eine Aufgabe der Erfindung, einen Scheibenbremsbelag der eingangs genannten Art anzugeben, bei dem ein Lösen und Abfallen der Dämpfungseinrichtung auf einfache Art und Weise und kostengünstig verhindert werden kann.

Diese Aufgabe wird bei einem Scheibenbremsbelag der eingangs genannten Art mit den Merkmalen des Anspruchs 1 gelöst, insbesondere dadurch, dass die Dämpfungseinrichtung mittels einer mechanischen Sicherungseinrichtung gegen Lösen von der Trägerplatte sowohl in einer Ebene der Trägerplatte als auch senkrecht dazu gesichert ist. Die erfindungsgemäße Sicherungseinrichtung wirkt mechanisch und kann damit auch auf Dauer Schwingungen widerstehen, ohne sich zu lösen. Anders als eine Verbindung mittels Klebstoff findet hierbei keine Zerrüttung statt, und die Dämpfungseinrichtung kann dauerhaft lagegesichert werden. Die Sicherungseinrichtung sichert die Dämpfungseinrichtung sowohl in einer Ebene der Trägerplatte als auch senkrecht dazu. Die Ebene der Trägerplatte wird durch die Längserstreckung der Trägerplatte definiert und ist in der Regel parallel zu einer Ebene einer Bremsscheibe und damit senkrecht zu einer Rotationsachse der Bremsscheibe. Hierdurch wird sowohl ein Verschieben oder Verdrehen der Dämpfungseinrichtung innerhalb der Ebene verhindert, als auch ein Lösen und Entfernen der Dämpfungseinrichtung von der Trägerplatte. Durch eine derartige mechanische Sicherungseinrichtung wird eine einfache und kostengünstige Möglichkeit der Sicherung der Dämpfungseinrichtung erreicht.

Bevorzugt wirkt die Sicherungsvorrichtung sowohl kraft- als auch formschlüssig. In einer bevorzugten Variante ist eine formschlüssige Sicherung innerhalb der Ebene der Trägerplatte vorgesehen, während eine kraftschlüssige Sicherung senkrecht zur Trägerplatte vorgesehen ist. In einer weiteren bevorzugten Variante ist eine kraftschlüssige Sicherung in der Ebene der Trägerplatte vorgesehen und eine formschlüssige Sicherung senkrecht zur Trägerplatte. In einer weiter bevorzugten Variante sind Mischungen hieraus vorgesehen, indem beispielsweise eine formschlüssige Lagesicherung in der Ebene der Trägerplatte bereitgestellt wird, während senkrecht zur Trägerplatte eine Sicherung sowohl kraft- als auch formschlüssig erfolgt. Durch die Kombination von beiden Wirkmechanismen wird eine besonders gute Sicherung erreicht, und ferner eine einfache Konstruktion der Sicherungseinrichtung, wodurch eine einfache Herstellung und Montage erreicht werden kann, wodurch die Kosten positiv beeinflusst werden.

In einer weiteren bevorzugten Ausführungsform weist die Sicherungsvorrichtung wenigstens einen Vorsprung auf, der an der Trägerplatte angeordnet ist, und wenigstens eine korrespondierende Öffnung, die in der Dämpfungseinrichtung ausgebildet ist. In einem montierten Zustand greift der wenigstens eine Vorsprung in die wenigstens eine korrespondierende Öffnung ein, wodurch wenigstens eine formschlüssige Verbindung innerhalb der Ebene der Trägerplatte erreicht wird. Es soll verstanden werden, dass die Anzahl an Vorsprüngen mit der Anzahl an Öffnungen übereinstimmt beziehungsweise wenigstens für jeden Vorsprung eine korrespondierende Öffnung vorgesehen ist.

In einer bevorzugten Weiterbildung sind an der Öffnung eine Mehrzahl Klemmelemente vorgesehen, zum klemmenden Zusammenwirken mit dem Vorsprung. Die Klemmelemente sind bevorzugt so ausgebildet, dass sie einem Lösen der Dämpfungseinrichtung senkrecht zur Ebene der Trägerplatte entgegenwirken. Hierdurch wird einerseits eine einfache Montage erreicht als auch andererseits eine effektive Sicherung. Bei der Montage ist die Dämpfungseinrichtung mit den Öffnungen auf die korrespondierenden Vorsprünge zu stecken und dabei gegebenenfalls die Klemmkraft der Klemmelemente zu überwinden. Liegt die Dämpfungseinrichtung dann an der Trägerplatte an, wirken die Klemmelemente einem Lösen entgegen, sodass dieses verhindert wird.

In einer besonders bevorzugten Ausführungsform sind die Klemmelemente als zahnförmige Vorsprünge radial nach innen in die Öffnungen ragend ausgebildet. Die zahnförmigen Vorsprünge kommen dann bevorzugt mit dem Vorsprung in Kontakt. Dabei ist es denkbar, dass diese sich wenigstens teilweise auch in ein Material des Vorsprungs eingraben und so zu einer reibschlüssigen Kopplung auch eine wenigstens teilweise formschlüssige Verbindung erreichen.

Besonders bevorzugt bilden die Spitzen der Klemmelemente gemeinsam einen Durchmesser, der kleiner ist als ein Durchmesser des Vorsprungs, der an der Trägerplatte angeordnet ist. Hierdurch wird sichergestellt, dass bei einer Montage die Klemmelemente mit dem Vorsprung in Kontakt sind, und ferner wird ein gewisser fester Sitz erreicht. Die Klemmelemente werden bei der Montage auf den Vorsprung aufgepresst, wodurch eine feste Verbindung erreicht wird.

Ferner ist bevorzugt, dass die Klemmelemente in einem montierten Zustand mit ihren Spitzen an dem Vorsprung anliegen und vorzugsweise etwa einen Winkel von 45° bezogen auf eine flächige Ausdehnung der Dämpfungseinrichtung haben. Hierdurch wird eine gute Sicherung sowohl in einer Ebene der Trägerplatte als auch senkrecht zu dieser erreicht, und Kräfte können durch den 45°-Winkel gut und effektiv aufgenommen und übertragen werden.

In einer bevorzugten Weiterbildung ist die Dämpfungseinrichtung als Scheibe ausgebildet. Eine scheibenförmige Dämpfungseinrichtung hat den Vorteil, dass diese flächig an der Trägerplatte anliegen kann und so Schwingungen besonders effektiv übertragen werden. Ferner ist sie so wenig Platz raubend.

Vorzugsweise hat die Scheibe eine äußere Kontur, die in etwa der äußeren Kontur des Belagsmaterials entspricht. Über das Belagsmaterial werden die Schwingungen übertragen, und so kann auf der gesamten Fläche des Belagsmaterials Schwingung durch die Dämpfungseinrichtung gedämpft werden.

Bevorzugt weist die Scheibe ein Blech auf. Bevorzugt ist das Blech ein Stahlblech. Ein solches Stahlblech hat die Möglichkeit, Geräusche mit Frequenzen von 1000 bis 18000 Hertz zu dämpfen, indem es von der Resonanz in Vibration gesetzt wird und so der Entstehung des Quietschgeräusches vorbeugt. Ferner ist ein solches Stahlblech leicht zu verarbeiten und preiswert.

Weiterhin ist vorzugsweise auf der dem Belagsmaterial abgewandten Seite der Scheibe eine Gummischicht aufgebracht. Auch diese wirkt nochmals schwingungsdämpfend. Dadurch wird verhindert, dass das Blech der Dämpfungseinrichtung in Resonanz gerät.

Gemäß einer weiteren bevorzugten Ausführungsform ist die Dämpfungseinrichtung mittels einer Klebeverbindung mit der Trägerplatte verbunden. Die Klebeverbindung wirkt als Primärverbindung, während die Sicherungseinrichtung als Sekundärverbindung dient. Eine Klebeverbindung zwischen Dämpfungseinrichtung und Trägerplatte führt zu einer guten Schwingungsübertragung und die erfindungsgemäße Sicherungseinrichtung dient dann bevorzugt als Schutz gegen Lösen und vollständiges Abfallen der Dämpfungseinrichtung von der Trägerplatte.

In einer weiteren bevorzugten Ausgestaltung ist die Scheibe als Stanzbauteil ausgebildet. Die Dämpfungseinrichtung ist vorzugsweise als Scheibe ausgebildet mit einem Stahlblech. Das Stahlblech weist wenigstens eine Öffnung auf. Die Öffnung ist so ausgebildet, dass zahnförmige Klemmelemente sich radial nach innen erstrecken. Dies ist besonders einfach als Stanzportal auszubilden, indem zunächst Durchgangslöcher eingebracht werden, deren Durchmesser kleiner ist als der Außendurchmesser des korrespondierenden Vorsprungs der Trägerplatte und anschließend oder gleichzeitig ein oder mehrere Schlitze an den Randöffnungen eingebracht werden, die sich radial nach außen erstrecken. So können auf einfache Art und Weise zahnförmige Klemmelemente gebildet werden, wodurch die Herstellung vereinfacht ist. Wird in einem solchen Fall die Dämpfungseinrichtung auf den Vorsprung gesetzt, werden die einzelnen Klemmelemente verbogen und erstrecken sich unter einem Winkel weg von der Trägerplatte und liegen bevorzugt an dem Vorsprung der Trägerplatte an.

In einer weiteren bevorzugten Ausführungsform sind wenigstens zwei Vorsprünge und zwei korrespondierende Öffnungen vorgesehen, die einen Abstand zueinander haben. Sind zwei derartige Vorsprünge vorgesehen, ist ein Formschluss gegen Verdrehen der Dämpfungseinrichtung gegenüber der Trägerplatte vorgesehen. Ferner ist auch ein Lösen in einer Richtung senkrecht zur Ebene der Trägerplatte einfacher verhinderbar, da zwei Vorsprünge vorgesehen sind, an denen Klemmelemente reibschlüssig und/oder formschlüssig wirken können.

In einem weiteren Aspekt der Erfindung wird die eingangs genannte Aufgabe bei einer Dämpfungseinrichtung der eingangs genannten Art dadurch gelöst, dass diese für einen Scheibenbremsbelag nach wenigstens einem der vorstehenden Ansprüche ausgebildet ist. Es soll verstanden werden, dass der Scheibenbremsbelag gemäß dem ersten Aspekt der Erfindung und die Dämpfungseinrichtung gemäß dem zweiten Aspekt der Erfindung gleiche und ähnliche bevorzugte Ausführungsformen haben und die Dämpfungseinrichtung insbesondere einige oder alle Merkmale der Dämpfungseinrichtung gemäß dem ersten Aspekt der Erfindung aufweisen kann. Insofern wird vollumfänglich auf die obige Beschreibung Bezug genommen.

Nachstehend wird die Erfindung anhand eines Ausführungsbeispiels unter Bezugnahme auf die beliegenden Figuren näher erläutert. Dabei zeigen:
Fig. 1 eine Seitenansicht eines Scheibenbremsbelags;
Fig. 2 eine Draufsicht auf den Scheibenbremsbelag gemäß Fig. 1;
Fig. 3 ein Detail aus Fig. 1,
Fig. 4 ein Detail aus Fig. 2;
Fig. 5 einen Scheibenbremsbelag gemäß Fig. 2 ohne Dämpfungseinrichtung;
Fig. 6 eine Draufsicht auf eine Dämpfungsvorrichtung;

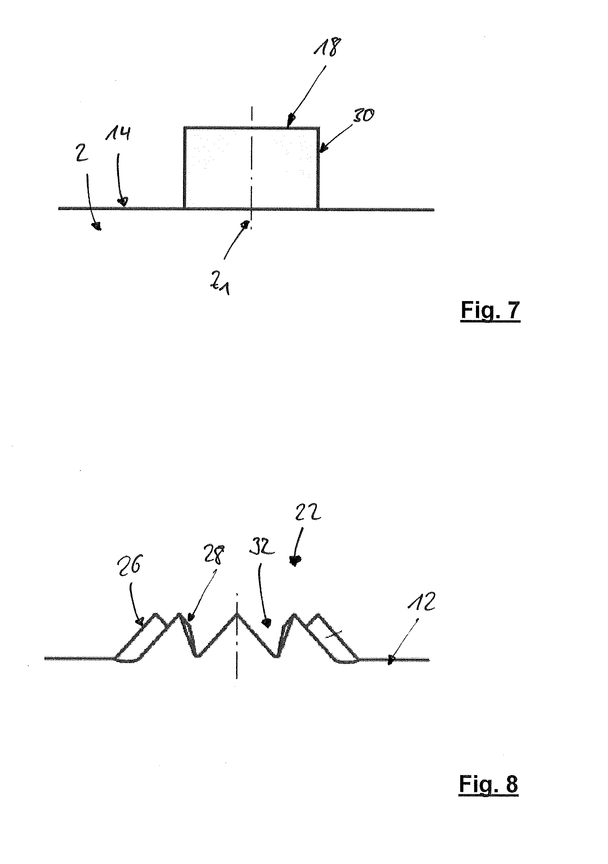

Fig. 7 ein Detail aus Fig. 5; und
Fig. 8 ein Detail aus Fig. 6.

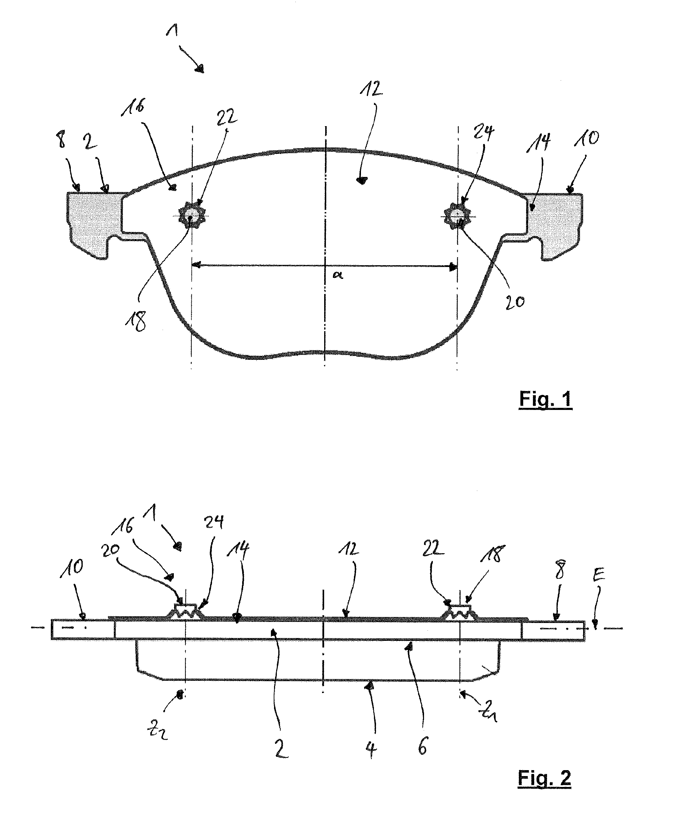

Ein Scheibenbremsbelag 1 weist eine Trägerplatte 2 und ein Belagsmaterial 4 auf, das fest mit einer belagsseitigen Oberfläche 6 der Trägerplatte 2 verbunden ist (vgl. Fig. 1 und 2). Die Trägerplatte 2 ist als im Wesentlichen ebene Stahlplatte ausgebildet und definiert eine Ebene E (vgl. Fig. 2). Die belagsseitige Oberfläche 6 der Trägerplatte E hat eine äußere Kontur, die etwas größer ist als die Kontaktfläche des Belagsmaterials 4, welches auf die belagsseitige Oberfläche 6 der Trägerplatte 2 gepresst ist. Die Trägerplatte 2 hat zwei sich seitlich von dieser erstreckende Haltevorsprünge 8, 10, mittels denen der Scheibenbremsbelag 1 in einer Bremsvorrichtung eines Fahrzeug befestigbar ist. Die Haltevorsprünge 8, 10 dienen insbesondere dazu, die Scherkräfte, die beim Bremsvorgang auf den Scheibenbremsbelag wirken, aufzunehmen.

Der Scheibenbremsbelag 1 weist ferner eine Dämpfungseinrichtung 12 auf. Die Dämpfungseinrichtung 12 ist als sogenanntes Antiquietschblech ausgebildet und auf einer dem Belagsmaterial 4 abgewandten Seite 14 der Trägerplatte 2 befestigt. Die Dämpfungseinrichtung 12 dient dazu, Geräusche mit den Frequenzen von ca. 1000 bis 18000 Hertz zu dämpfen. Die beim Bremsen des Fahrzeugs entstehenden akustischen Schwingungen werden beim Durchdringen der Dämpfungseinrichtung 12 in eine Vibration dieser verwandelt, wodurch der Quietschgeräusch-Entstehung vorgebeugt wird.

Die Dämpfungseinrichtung 12 hat eine äußere Kontur, die etwas größer ist als die äußere Kontur des Belagsmaterials 4 (vgl. Fig. 2). Hierdurch ist eine Dämpfung auf der gesamten Fläche möglich.

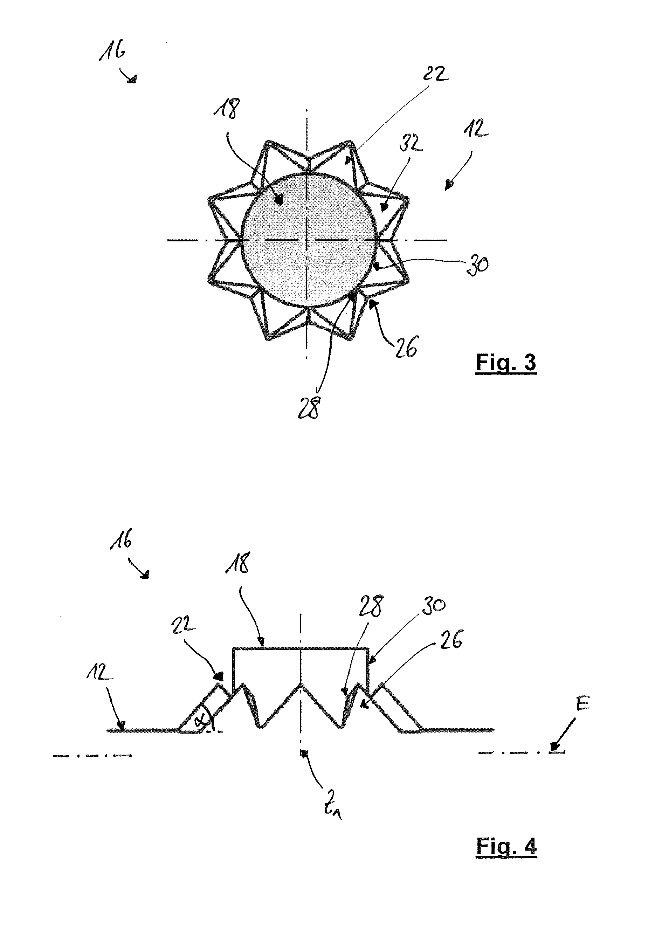

Die Dämpfungseinrichtung 12 ist mittels einer mechanischen Sicherungseinrichtung 16 gegen Lösen von der Trägerplatte 2 sowohl in einer Ebene E der Trägerplatte 2 als auch senkrecht dazu gesichert. Die Sicherungseinrichtung 16 wirkt sowohl form- als auch kraftschlüssig, was mit Bezug auf die Fig. 3 und 4 näher erläutert werden wird.

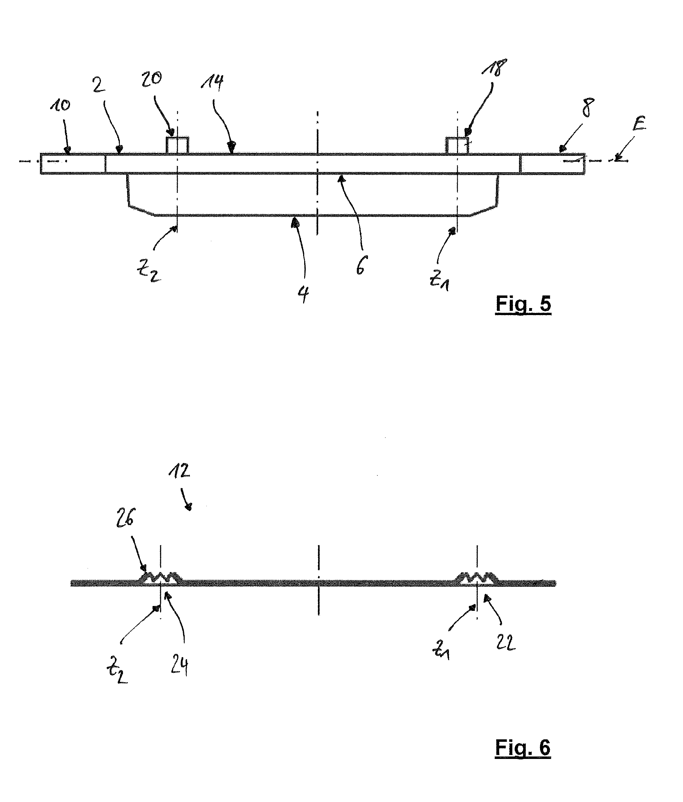

Die Sicherungseinrichtung 16 weist zwei Vorsprünge 18, 20 auf, die in diesem Ausführungsbeispiel als zylindrische Zapfen ausgebildet sind und die an der Trägerplatte 2 angeordnet sind. Genauer gesagt sind die Zapfen 18, 20 an der dem Belagsmaterial 4 abgewandten Seite 14 der Trägerplatte 2 angeordnet, insbesondere einstückig angeformt. Zentralachsen Z₁, Z₂ der Zapfen 18, 20 erstrecken sich senkrecht zur Ebene E (vgl. Fig. 5). Eine axiale Länge der Zapfen 18, 20 entspricht dabei in etwa der Dicke der Trägerplatte 2. Die beiden Zapfen 18, 20 sind mit einem Abstand a (vgl. Fig. 1) zueinander angeordnet, der in etwa dem zehn- bis fünfzehnfachen Durchmesser eines Zapfens 18, 20 entspricht.

Die Sicherungseinrichtung 16 weist ferner Öffnungen 22, 24 auf. An den Öffnungen 22, 24 sind eine Mehrzahl zahnförmiger Vorsprünge als Klemmelemente 26 vorgesehen. Die Klemmelemente 26 (in den Fig. nur jeweils eines mit Bezugszeichen versehen) weisen eine Spitze 28 auf, die im montierten Zustand an einer Mantelfläche 30 der Zapfen 18, 20 anliegt. Die Klemmelemente 26 sind einstückig mit einem Blechmaterial der Dämpfungseinrichtung 12 ausgebildet und gebildet, indem keilförmige Einschnitte 32 an den Rand der Öffnung eingebracht werden. Die Schnitttiefe und auch die radiale Länge der einzelnen Klemmelemente 26 sind so gewählt, dass diese im montierten Zustand (vgl. Fig. 4) in etwa einen Winkel α von 45° einnehmen. Im nicht ausgebogenen Zustand (Winkel α = 0°) definieren die Spitzen 28 gemeinsam einen Durchmesser, der in etwa 10 bis 20 % kleiner ist als der Durchmesser der Zapfen 18, 20. Im montierten Zustand (vgl. Fig. 4) liegen die Spitzen 28 auf einer Kreislinie um die Zapfen 18, 20 an der Mantelfläche 30 an, die etwa auf der Hälfte der axialen Erstreckung der Zapfen 18, 20 angeordnet ist. Wie sich insbesondere leicht aus den Fig. 3 und 4 entnehmen lässt, bietet die Sicherungseinrichtung 16 eine formschlüssige Sicherung der Dämpfungseinrichtung gegen ein Bewegen in Richtung der Ebene E. Ferner wird durch die Anlage der Spitzen 28 der Klemmelemente 26 an der Mantelfläche 30 der Zapfen 18, 20 eine reibschlüssige Verbindung zwischen der Dämpfungseinrichtung und der Trägerplatte erreicht, wodurch ein Lösen senkrecht zur Ebene E (bezogen auf Fig. 4 nach oben) verhindert wird.

Zur Montage des erfindungsgemäßen Scheibenbremsbelags wird zunächst ein Scheibenbremsbelag ohne Dämpfungseinrichtung, wie in Fig. 5 dargestellt, bereitgestellt. Die Dämpfungseinrichtung 12, welche ein Blech mit Öffnungen 22, 24 aufweist (vgl. Fig. 6) wird anschließend auf die dem Belagsmaterial 4 abgewandten Oberfläche 14 aufgebracht. Dabei findet eine zumindest teilweise elastische Verformung der Klemmelemente 26 statt, sodass eine klemmende Anlage der Spitzen 28 der Klemmelemente 26 an der Mantelfläche 30 erreicht wird. Zusätzlich wird die Dämpfungseinrichtung 12 mittels einer Klebeverbindung gegen die Oberfläche 14 geklebt. Die Sicherungseinrichtung 16 dient daher bevorzugt als sekundäre Sicherung gegen ein vollständiges Lösen und Abfallen der Dämpfungseinrichtung, wenn die Klebeverbindung einen Schaden erleiden sollte.

## Patentansprüche

1. Scheibenbremsbelag (1), mit
einer Trägerplatte (2),
einem Belagsmaterial (4), das fest mit einer belagsseitigen Oberfläche (6) der Trägerplatte (2) verbunden ist, und
einer Dämpfungseinrichtung (12) zum Dämpfen von durch einen Bremsvorgang verursachten akustischen Schwingungen,
**dadurch gekennzeichnet, dass** die Dämpfungseinrichtung (12) mittels einer mechanischen Sicherungseinrichtung (16) gegen Lösen von der Trägerplatte (2) sowohl in einer Ebene (E) der Trägerplatte als auch senkrecht dazu gesichert ist.

2. Scheibenbremsbelag nach Anspruch 1, wobei die Sicherungseinrichtung (16) kraft- und formschlüssig sichert.

3. Scheibenbremsbelag nach einem der vorstehenden Ansprüche, wobei die Sicherungseinrichtung (16) wenigstens ein Vorsprung (18, 20), der an der Trägerplatte (2) angeordnet ist, und wenigstens eine korrespondierende Öffnung (22, 24), die in der Dämpfungseinrichtung (12) ausgebildet ist, aufweist.

4. Scheibenbremsbelag nach Anspruch 3, wobei an der Öffnung (22, 24) eine Mehrzahl Klemmelemente (26) vorgesehen sind zum klemmenden Zusammenwirken mit dem Vorsprung (18, 20).

5. Scheibenbremsbelag nach Anspruch 4, wobei die Klemmelemente (26) als zahnförmige Vorsprünge radial nach Innen in die Öffnung (22, 24) ragen.

6. Scheibenbremsbelag nach Anspruch 5, wobei Spitzen (28) der Klemmelemente (26) gemeinsam einen Durchmesser definieren, der kleiner ist als ein Durchmesser des Vorsprungs (18, 20), der an der Trägerplatte (2) angeordnet ist.

7. Scheibenbremsbelag nach Anspruch 6, wobei die Klemmelemente (26) in einem montierten Zustand mit ihren Spitzen (28) an dem Vorsprung (18, 20) anliegen und vorzugsweise etwa einen Winkel von 45° bezogen auf eine flächige Ausdehnung der Dämpfungseinrichtung (12) haben.

8. Scheibenbremsbelag nach einem der vorstehenden Ansprüche, wobei die Dämpfungseinrichtung (12) als Scheibe ausgebildet ist.

9. Scheibenbremsbelag nach Anspruch 8, wobei die Scheibe eine äußere Kontur hat, die in Etwa der äußeren Kontur des Belagsmaterials (4) entspricht.

10. Scheibenbremsbelag nach Anspruch 8 oder 9, wobei die Scheibe ein Blech aufweist.

11. Scheibenbremsbelag nach einem der Ansprüche 8 bis 10, wobei die Scheibe eine Gummischicht aufweist, vorzugsweise auf einer dem Belagsmaterial (4) abgewandten Seite.

12. Scheibenbremsbelag nach einem der vorstehenden Ansprüche, wobei die Dämpfungseinrichtung (12) mittels einer Klebeverbindung mit der Trägerplatte (2) verbunden ist.

13. Scheibenbremsbelag nach Anspruch 3 und 10, wobei die Scheibe als Stanzbauteil ausgebildet ist.

14. Scheibenbremsbelag nach Anspruch 3, wobei zwei Vorsprünge (18, 20) und zwei korrespondierende Öffnungen (22, 24) mit einem Abstand (a) zueinander vorgesehen sind.

15. Dämpfungseinrichtung (12) für einen Scheibenbremsbelag (1) nach einem der vorstehenden Ansprüche.
